# EUROPÄISCHE PATENTSCHRIFT

(11) **EP 3 921 100 B1**
(45) Veröffentlichungstag und Bekanntmachung des Hinweises auf die Patenterteilung: **10.04.2024**
(21) Anmeldenummer: 20703741.7
(22) Anmeldetag: 05.02.2020
(51) Int. Cl.: B22F 1/05, B22F 1/145, B22F 1/148, B22F 3/20, B22F 9/04, B22F 9/22, B33Y 70/00, C22C 1/04, C22C 1/047, C22C 13/00, C22C 27/02, B22F 1/065, B22F 5/12, B22F 9/08, B22F 10/20, B22F 10/28

(54) **PULVER AUF BASIS VON NIOBZINNVERBINDUNGEN FÜR DIE HERSTELLUNG VON SUPRALEITENDEN BAUTEILEN**
POWDERS BASED ON NIOBIUM-TIN COMPOUNDS FOR MANUFACTURING SUPERCONDUCTING COMPONENTS
POUDRES À BASE DE COMPOSÉS NIOBIUM-ÉTAIN POUR LA FABRICATION D'ÉLÉMENTS SUPRACONDUCTEURS

(30) Priorität: 08.02.2019 DE 102019000905
(43) Veröffentlichungstag der Anmeldung: 15.12.2021
(73) Patentinhaber: TANIOBIS GmbH, 38642 Goslar (DE)
(72) Erfinder: BRUMM, Holger, 38644 Goslar (DE); HAAS, Helmut, 38312 Börßum (DE); SCHNITTER, Christoph, 31188 Holle (DE)
(86) Internationale Anmeldenummer: PCT/EP2020/052826
(87) Internationale Veröffentlichungsnummer: WO 2020/161170

(56) Entgegenhaltungen:
- R. O. SUZUKI ET AL: "Processes to produce superconducting Nb3Sn powders from Nb-Sn oxide", JOURNAL OF MATERIALS SCIENCE, Bd. 22, Nr. 6, 1. Juni 1987 (1987-06-01), Seiten 1999-2005, XP055671491, Dordrecht ISSN: 0022-2461, DOI: 10.1007/BF01132930
- T. SATISH KUMAR ET AL: "Preparation of Niobium Metal Powder by Two-Stage Magnesium Vapor Reduction of Niobium Pentoxide", JOURNAL OF METALLURGY, Bd. 2013, 1. Januar 2013 (2013-01-01), Seiten 1-6, XP055672284, ISSN: 1687-9465, DOI: 10.1155/2013/629341

## Beschreibung

Die vorliegende Erfindung betrifft Pulver auf Basis Niobzinnverbindungen, gemäß den beigefügten Ansprüchen.

Supraleiter bezeichnen Materialien, deren elektrischer Widerstand beim Unterschreiten einer bestimmten Temperatur, der sogenannten Sprungtemperatur, auf null fällt. Im supraleitenden Zustand bleibt das Innere des Materials frei von elektrischen und magnetischen Felder und der Strom wird verlustfrei transportiert. Supraleiter werden unter anderem zur Erzeugung starker, konstanter Magnetfelder oder für die Herstellung verlustarmer Transformatoren verwendet, die bei gleicher Leistung kleinere Abmessungen und Masse als herkömmliche Transformatoren haben und somit vor allem im mobilen Betrieb Vorteile bringen.

Supraleiter lassen sich in verschiedene Kategorien wie metallische Supraleiter, keramische Supraleiter und Hochtemperatursupraleiter einteilen. Spätestens seit der Entdeckung der Sprungtemperatur von Niobzinn (Nb₃Sn) von 18,05 K sind Niob und seine Legierungen in den Fokus als Materialien für die Herstellung von Supraleitern gerückt. So werden aus Niob gefertigte supraleitende Hohlraumresonatoren beispielsweise in Teilchenbeschleunigern (u. a. XFEL und FLASH am DESY in Hamburg oder CERN in Genf) eingesetzt.

Als supraleitende Bauteile sind insbesondere supraleitende Drähte von Interesse, die unter anderem zur Herstellung von supraleitenden Spulen verwendet werden.

Für starke supraleitende Spulen sind in der Regel kilometerlange Drähte, mit nur einigen Mikrometer dicken Leiterfäden/Filamenten nötig, die komplizierte Herstellungsverfahren erfordern.

Für die Herstellung solcher Drähte, insbesondere auf Basis von Niobzinnlegierungen wird im Wesentlichen auf das sogenannte Bronze-Verfahren zurückgegriffen, wobei eine Cu-Sn-Legierung als Ausgangsstoff verwendet wird.

So beschreibt EP 0 048 313 supraleitende Drähte auf Basis von Bronze-Nb₃Sn, die bei hohen Magnetfeldern anwendbar sind und die durch eine kubische Phase im Bronze-Nb₃Sn-Draht gekennzeichnet sind und stabilisierende, die Bildung einer tetragonalen Phase weitgehend verhindernde und/oder tetragonale Deformation (1-c/a) reduzierende Legierungsbestandteile aus der Gruppe Li Be Mg Sc Y U Ti Zr Hf V Ta Mo Re Fe Ru Ni Pd Zn Al Ga In TI Si Ge Sb im Gewichtsprozent-Bereich zwischen 0,01 und 7, bezogen auf den Nb-Anteil, und/oder zwischen 0,05 und 10, bezogen auf den Bronze-Anteil im Draht, aufweisen.

Alternativ können supraleitende Drähte auf Basis von Niobzinnlegierungen durch das sogenannte PIT (powder-in-tube)-Verfahren hergestellt werden, bei dem in ein Niobrohr eine pulverförmige zinnhaltige Ausgangsverbindung eingebracht und dann zu einem Draht ausgezogen wird. In einem letzten Schritt wird eine supraleitende Nb₃Sn-Grenzschicht zwischen der niobhaltigen Rohrhülle und dem eingefüllten zinnhaltigen Pulver durch eine Wärmebehandlung gebildet. In Bezug auf die zinnhaltige Ausgangsverbindung ist dabei die Phasenzusammensetzung, chemische Reinheit und Partikelgröße, die nicht größer als der Durchmesser des fertigen Filaments sein darf, entscheidend.

T. Wong et all beschreibt beispielweise den PIT Prozess und die Herstellung der zinnhaltigen Ausgangsverbindung am Beispiel des NbSn₂ (T. Wong et al, "Ti and Ta Additions to Nb3Sn by the Powder in Tube Process", IEEE Transactions on Applied superconductivity, Vol. 11, No 1 (2001), 3584-3587). Nachteilig bei dem Verfahren ist dabei, dass für eine zufriedenstellende Umsetzung von Niob mit Zinn zum NbSn₂ ein mehrstufiger Prozess aus Mahlungen und thermischen Behandlungen von bis zu 48 Stunden notwendig ist. Weiterhin ist die allgemeine Lehre, dass der Sauerstoffgehalt möglichst niedrig sein sollte.

US 7,459,030 beschreibt ein Herstellungsverfahren für einen supraleitenden Nb₃Sn-Draht nach dem PIT Prozess, bei dem ein Tantalzinnlegierungspulver als Ausgangsverbindung verwendet wird. Zur Herstellung dieser werden K₂NbF₇ und K₂TaF₇ eingesetzt, die vor der Umsetzung mit Zinn zu dem jeweiligen Niob- und Tantalmetall reduziert werden. Das beschriebene Verfahren weist allerdings die Nachteile einiger Beschränkungen für die Verwendung dieser Niob- und Tantalmetalle auf. So können nur solche mit einem maximalen Gehalt an Sauerstoff von weniger als 3000 ppm und Wasserstoff von weniger als 100 ppm eingesetzt werden. Die Überschreitung des Sauerstoffgehaltes führt zu einer minderen Qualität des fertigen Drahtes. Bei Wasserstoffwerten über 100 ppm treten sicherheitstechnische Probleme bei der Prozessführung auf, da bei der Temperaturbehandlung der Wasserstoff entweicht. Weiterhin weist das beschriebene Verfahren die Nachteile auf, dass die Zielverbindungen einen hohen Gehalt an unreagiertem Zinn enthalten und der fertige Drahtkern weiterhin tantalhaltige Verbindungen enthält, was sich negativ auf die supraleitenden Eigenschaften der Drähte auswirken kann. Weiterhin fallen bei der Reduktion der Ausgangsverbindungen K₂NbF₇ und K₂TaF₇ schwerlösliche Metallfluoride wie beispielsweise MgF₂ oder CaF₂ an, die nicht vollständig abgetrennt werden können. Darüber hinaus sind alle fluorhaltigen Verbindungen in der Prozesskette sehr toxisch.

A. Godeke et al liefern einen Überblick über die herkömmlichen PIT-Verfahren für die Herstellung von Niobzinn-Supraleitern (A. Godeke et al, "State of the art powder-in-tube niobium-tin superconductors", Cyrogenics 48 (2008), 308-3016). M. Lopez et al beschreiben die Synthese von nano-intermetallischem Nb₃Sn durch mechanische Legierung und Glühen bei niedrigen Temperaturen (M. Lopez et al, "Synthesis of nano intermetallic Nb3Sn by mechanical alloying and annealing at low temperature", Journal of Alloys and Compounds 612 (2014), 215-220). Das auf diese Weise hergestellte Nb₃Sn weist einen Anteil von 87 Gew.-% Nb₃Sn und 8 Gew.-% NbO auf.

R. O. Suzuki et al, in J. Mater. Sci., Bd. 22, Nr. 6, 1. 1987, Seiten 1999-2005, offenbaren ein Nb3Sn Pulver für die Herstellung supraleitender Bauteile, dadurch gekennzeichnet, dass das Pulver keine separaten NbO- und SnO-Phasen aufweist.

Alle im Stand der Technik bekannten Verfahren zur Herstellung von supraleitenden Drähten aus Nb₃Sn weisen jedoch den Nachteil auf, dass durch Sauerstoffeintrag der Elemente Niob und Zinn sowie während der Prozessführung, beispielsweise durch Luft, ein signifikanter Anteil an Sauerstoff auf die Zielverbindungen übertragen werden. Daher ist beispielsweise das Verfahren nach US 7,459,030 auf die Verwendung von Niob und Tantalmetallpulver mit einem Sauerstoffgehalt von maximal 3000 ppm und Zinn auf mit einem Sauerstoffgehalt von maximal 2000 ppm beschränkt. Ein hoher Anteil an Sauerstoff in der Zielverbindung kann unter anderem zur Besetzung der Zwischengitterplätze mit Sauerstoffatomen sowie zur Ausbildung einer separaten NbO-Phase führen, die durch Röntgenbeugungsanalysen nachweisbar ist. Das auf diese Weise gebundene Niob steht somit nicht mehr für weitere Reaktionen, wie die Ausbildung der Nb₃Sn-Grenzschicht, zur Verfügung. Darüber hinaus wird die für die Ausbildung der Grenzschicht notwendigen Festkörperdiffusion von Zinn und Niob behindert. Dies wirkt sich nicht nur negativ auf die Ausbeute und Effizienz der Herstellungsverfahren aus, die Anwesenheit von Sauerstoff kann auch zu einer deutlichen Beeinträchtigung der supraleitenden Eigenschaften, wie beispielsweise der kritischen Stromdichte oder des Restwiderstandsverhältnises (Residual Resistance Ratio RRR), der Zielverbindung und des Drahtes führen.

Die Aufgabe der vorliegenden Erfindung ist es daher geeignete Ausgangsverbindungen für die Herstellung von supraleitenden Bauteilen, insbesondere supraleitenden Drähten, zur Verfügung zu stellen, die eine effiziente Umsetzung ohne Beeinträchtigung der supraleitenden Eigenschaften der Zielverbindungen erlauben.

Es wurde überraschend gefunden, dass diese Aufgabe durch ein Pulver gelöst wird, das sich dadurch auszeichnet, dass es keine separaten NbO- oder SnO-Phasen aufweist.

Ein erster Gegenstand der vorliegenden Erfindung ist daher ein Pulver für die Herstellung supraleitender Bauteile umfassend NbₓSn_{y} mit 1 ≤ x ≤ 6 und 1 ≤ y ≤ 5, wobei das Pulver keine separaten NbO- und/oder SnO-Phasen aufweist. Dies zeigt sich insbesondere dadurch, dass die Pulver keine NbO- und/oder SnO-Reflexe im Röntgendiffraktogramm aufweisen, beispielsweise bestimmt an pulverförmigen Proben mit einem Gerät der Firma Malvern-PANalytical (X'Pert-MPD mit Halbleiterdetektor, Röntgenröhre Cu LFF mit 40KV / 40mA, Ni-Filter).

In einer bevorzugten Ausführungsform handelt es sich bei der NbₓSn_{y}-Verbindung um eine Verbindung ausgewählt aus der Gruppe bestehend aus Nb₃Sn, Nb₆Sn₅, NbSn₂ und Mischungen hiervon.

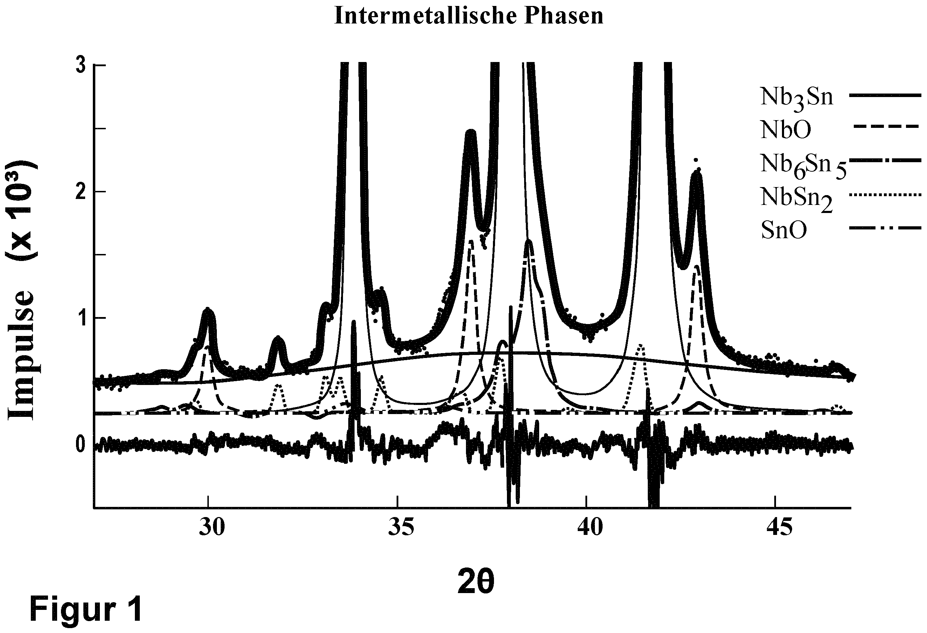

Analysen herkömmlicher Pulver, wie sie durch den Stand der Technik zur Verfügung gestellt werden, zeigen, dass diese eine separate NbO-Phase aufweisen, die sich als Reflexe im Röntgendiffraktogramm darstellen, wie aus Figur 1 ersichtlich, die ein Diagramm von herkömmlichem Nb₃Sn zeigt (vgl. auch M. Lopez et al, "Synthesis of nano intermetallic Nb3Sn by mechanical alloying and annealing at low temperature", Journal of Alloys and Compounds 612 (2014), 215-220). Es wurde überraschend gefunden, dass Röntgendiffraktogramme der erfindungsgemäßen Pulver solche Reflexe nicht zeigen, woraus geschlossen werden kann, dass diese Pulver keine separaten NbO-Phasen aufweisen.

Erfindungsgemäß zeichnen sich die erfindungsgemäßen Pulver dadurch aus, dass der Sauerstoffgehalt im Pulver weniger als 1,1 Gew.-% und besonders bevorzugt von 0,2 bis 0,75 Gew.-% beträgt, bezogen auf das Gesamtgewicht des Pulvers. Der Sauerstoffgehalt des Pulvers kann beispielsweise mittels Trägergasheißextraktion (Leco TCH600) bestimmt werden.

Neben einem niedrigen Sauerstoffgehalt zeichnet sich das erfindungsgemäße Pulver weiterhin durch eine hervorragende Phasenreinheit aus, was sich unter anderem dadurch äußert, dass es nur einen geringen Anteil an kristallinen Phasen von anderen Verbindungen als der jeweiligen Niobzinn-Zielverbindung aufweist. In einer bevorzugten Ausführungsform ist das erfindungsgemäße Pulver daher dadurch charakterisiert, dass die Verbindungen Nb₃Sn und/oder Nb₆Sn₅ und/oder NbSn₂ einen Anteil von jeweils größer 92%, vorzugsweise größer 95%, besonders bevorzugt von größer 98%, ausmachen, bezogen auf alle nachgewiesen kristallographischen Phasen und bestimmt durch Rietveld-Analyse eines Röntgendiffraktogramms des erfindungsgemäßen Pulvers.

In einer bevorzugten Ausführungsform zeichnen sich die erfindungsgemäßen Pulver dadurch aus, dass das Pulver dreidimensionale Agglomerate mit einer Größe mit einem D90-Wert von weniger als 400 µm, vorzugsweise von 220 bis 400 µm, bestimmt mittels Laserbeugung, aufweist, die Agglomerate aus Primärpartikeln gebildet sind, die einen mittleren Partikeldurchmesser von weniger als 15 µm, bevorzugt von weniger als 8 µm haben, bestimmt mittels Rasterelektronenmikroskopie und die Agglomerate Poren aufweisen, von denen 90% oder mehr einen Durchmesser von 0,2 bis 15 µm, bestimmt mittels Quecksilberporosimetrie, aufweisen.

Der D90-Wert ist der Wert, der den prozentualen Anteil der Agglomerate im Pulver angibt, die eine Partikelgröße von weniger oder gleich der angegebenen Größe aufweisen.

In der Herstellung von supraleitenden Drähten hat es sich weiterhin als vorteilhaft erwiesen, wenn Pulver mit einer geringen Partikelgröße eingesetzt werden. Daher ist eine Ausführungsform des erfindungsgemäßen Pulvers bevorzugt, in der das Pulver eine Partikelgröße D99 von weniger als 15 µm, vorzugsweise weniger als 8 µm, besonders bevorzugt von 1 µm bis 6 µm aufweisen, bestimmt mittels Laserbeugung. Der D99-Wert ist dabei der Wert, der den Anteil der Partikel im Pulver angibt, die eine Partikelgröße von weniger als 15 µm aufweisen. Die Partikelgröße kann beispielsweise durch Aufmahlen der Pulver realisiert werden.

Für die Herstellung von supraleitenden Bauteilen mit additiven Fertigungsverfahren, wie beispielsweise LBM (laser beam melting), EBM (electron beam melting) und/oder LC (laser cladding) hat es sich als vorteilhaft erwiesen, Pulver mit einer besonderen sphärischen Partikelform zu verwenden. Hierbei hat sich überraschend gezeigt, dass die erfindungsgemäßen Pulver sich sehr gut nach bekannten Verfahren zu Pulvern mit kugelartigen Partikel verdüsen lassen, beispielweise mit der EIGA Methode (Electrode Induction-melting Gas Atomization). In einer bevorzugten Ausführungsform weisen daher mindestens 95% aller Pulverpartikel des erfindungsgemäßen Pulvers nach einer Verdüsung einen Feret-Durchmesser von 0,7 bis 1, vorzugsweise 0,8 bis 1, auf, wobei Feret-Durchmesser im Rahmen der vorliegenden Erfindung definiert ist als der kleinste Durchmesser geteilt durch den größten Durchmesser eines Partikels, bestimmbar durch Auswertung von SEM-Aufnahmen.

Das erfindungsgemäße Pulver weist vorzugsweise eine spezifische Oberfläche nach BET von 0,5 bis 5 m²/g, vorzugsweise 1 bis 3 m²/g auf. Die spezifische Oberfläche nach BET kann dabei gemäß ASTM D3663 bestimmt werden.

Für die Herstellung von supraleitenden Bauteilen mit akzeptablen Eigenschaften ist es unerlässlich, dass die chemische Reinheit der verwendeten Pulver hoch ist und Fremdstoffe nur in kontrollierter Form als Dotiermittel eingebracht werden. Unbeabsichtigt im Prozess eingebrachte Stoffe, insbesondere metallische Verunreinigungen und fluoridhaltige Verbindungen sind zu minimieren. In einer bevorzugten Ausführungsform weist das erfindungsgemäße Pulver einen Fluorgehalt von weniger als 25 ppm, vorzugsweise weniger als 10 ppm auf, wobei sich die ppm auf Massenanteile beziehen. In einer weiterhin bevorzugten Ausführungsform weist das erfindungsgemäße Pulver einen Gehalt an unbeabsichtigten metallischen Verunreinigungen mit Ausnahme von Tantal von in Summe weniger als 0,8 Gew.-%, bevorzugt von weniger als 0,5 Gew.-%, besonders bevorzugt weniger als 0,25 Gew.-% auf, jeweils bezogen auf das Gesamtgewicht des Pulvers.

In einer bevorzugten Ausführungsform enthält das erfindungsgemäße Pulver weiterhin Dotierstoffe. Durch die Zugabe geeigneter Dotierstoffe können die Eigenschaften des Pulvers je nach Bedarf angepasst werden, wobei überraschend gefunden wurde, dass an die Dotierstoffe keine besonderen Anforderungen zu stellen sind, sondern vielmehr die gängigen dem Fachmann bekannten Dotierstoffe verwendet werden können.

Einige der im Stand der Technik beschriebenen Verfahren zur Herstellung von supraleitenden Drähten auf Basis von Nb₃Sn gehen von einer Tantalzinnlegierung oder von einer intermetallischen Zinnlegierung auf Basis von Tantal und Niob als Vorläuferpulver aus. Dies hat jedoch den Nachteil, dass Rückstände von Tantal im späteren Nb₃Sn-Drahtfilament verbleiben und so die supraleitenden Eigenschaften der Produkte beeinträchtigt werden. Im Rahmen der vorliegenden Erfindung wurde überraschend gefunden, dass auf die Zugabe von Tantal verzichtet werden kann, ohne dass die Effektivität der Umsetzung negativ beeinflusst wird. In einer bevorzugten Ausführungsform ist das erfindungsgemäße Pulver daher im Wesentlichen frei von Tantal und Tantalverbindungen. In einer besonders bevorzugten Ausführungsform beträgt der Anteil an Tantal und seinen Verbindungen im erfindungsgemäßen Pulver weniger als 1 Gew.-%, vorzugsweise weniger als 0,5 Gew.-%, besonders bevorzugt weniger als 0,1 Gew.-%, jeweils bezogen auf das Gesamtgewicht des Pulvers.

Die erfindungsgemäßen Pulver zeichnen sich durch ihren niedrigen Sauerstoffgehalt aus, der sich unter anderem dadurch äußert, dass sich im Röntgendiffraktogramm der erfindungsgemäßen Pulver keine Reflexe für NbO und/oder SnO nachweisen lassen. Ein weiterer Gegenstand der vorliegenden Erfindung ist somit ein Verfahren zur Herstellung der erfindungsgemäßen Pulver, das es erlaubt diese Eigenschaft zu realisieren, wobei das erfindungsgemäße Verfahren die Umsetzung von Niobmetallpulver mit Zinnmetallpulver sowie einen Reduktionsschritt in Gegenwart eines Reduktionsmittels umfasst, wobei sich die zugesetzte Menge an Reduktionsmittel auf den zuvor bestimmten Gesamtgehalt an Sauerstoff der beiden verwendeten Metallpulver bezieht. Bei dem Reaktionsmittel handelt es sich um eines das ausgewählt ist aus der Gruppe bestehend aus Magnesium, Calcium, CaH₂ und MgH₂ und Mischungen hiervon.

Bei dem erfindungsgemäßen Verfahren wird in einem ersten Schritt das Niobmetallpulver mit Zinnmetallpulver umgesetzt und das erhaltene Produkt anschließend einem Reduktionsschritt in Gegenwart eines Reduktionsmittels unterzogen, wobei sich die zugesetzte Menge an Reduktionsmittel auf den zuvor bestimmten Gehalt an Sauerstoff des aus der ersten Umsetzung gewonnen Produktes bezieht.

Um die Verfahrensführung effizient zu gestalten, hat es sich als vorteilhaft erwiesen, die Umsetzung des Niobmetallpulvers mit dem Zinnmetallpulver direkt in Gegenwart eines Reduktionsmittels vorzunehmen. Daher ist eine Ausführungsform des erfindungsgemäßen Verfahrens bevorzugt, in der die Umsetzung des Niobmetallpulvers mit dem Zinnmetallpulver in Gegenwart eines Reduktionsmittels erfolgt.

Es wurde überraschend gefunden, dass die Ausbildung separater sauerstoffhaltiger Phasen wie NbO und SnO weiter reduziert werden kann, wenn die Umsetzung der metallischen Ausgangsverbindungen in Gegenwart eines dampfförmigen Reduktionsmittels vorgenommen wird. Insbesondere handelt es sich bei dem Reaktionsmittel um eines das ausgewählt ist aus der Gruppe bestehend aus Magnesium, Calcium und Mischungen hiervon. Es hat sich überraschend gezeigt, dass durch Verwendung dieser Reduktionsmittel, insbesondere in dampfförmigen Zustand, die Ausbildung von NbO- und SnO-Phasen im Pulver reduziert werden kann, während sich Rückstände des Reduktionsmittels einfach und rückstandsfrei aus dem Produktpulver entfernen lässt.

Die Entfernung des oxidierten Reduktionsmittels kann auf einfache Weise durch Waschen erfolgen. Daher ist eine Ausführungsform des erfindungsgemäßen Verfahrens bevorzugt, in der erhaltene Pulver weiterhin einem Waschschritt unterzogen wird. Es wurde überraschend gefunden, dass eine besonders effiziente Entfernung etwaiger Rückstände des Reduktionsmittels erzielt werden kann, wenn als Waschflüssigkeit Mineralsäuren verwendet werden. Daher ist eine Ausführungsform bevorzugt, bei der es sich bei dem Waschschritt um ein Waschen mit Mineralsäuren handelt. Vorzugsweise sind die Mineralsäuren ausgewählt aus der Gruppe bestehend aus Schwefelsäure, Salzsäure und Salpetersäure.

Durch die zusätzliche Behandlung mit einer auf den Gesamtgehalt an Sauerstoff bezogenen Menge an Reduktionsmittel im erfindungsgemäßen Verfahren bestehen die Beschränkungen hinsichtlich des Sauerstoffgehaltes der verwendbaren Einsatzstoffe, wie im Stand der Technik, beispielsweise der US 7,459,030, beschrieben, nicht mehr. Deutlich höhere Sauerstoffgehalte sind bei verbesserter Phasenreinheit der Zielverbindungen tolerierbar. Nichtsdestotrotz sollte der Sauerstoffgehalt nicht zu hoch sein. Daher ist eine Ausführungsform des erfindungsgemäßen Verfahrens bevorzugt, in der ein Niobmetallpulver mit weniger als 3 Gew.-% Sauerstoff, bevorzugt von 0,4 bis 2,5 Gew.-%, besonders bevorzugt von 0,5 bis 1,5 Gew.-% und/oder ein Zinnmetallpulver mit weniger als 1,5 Gew.-%, besonders bevorzugt von 0,4 bis 1,4 Gew.-% Sauerstoff verwendet wird, wobei sich die Angaben jeweils auf das Gesamtgewicht des Pulvers beziehen.

Es wurde überraschend gefunden, dass die Morphologie der verwendeten Niobmetallpulver nicht beschränkt ist. Es können Pulver mit porösen Agglomeraten, die aus dreidimensional verbundenen Primärpartikeln bestehen, als auch Pulver, bestehend aus unregelmäßigen oder sphärischen Partikel ohne Porosität, verwendet werden.

Um die Bildung von schwerlöslichen MgF₂ und CaF₂ im erfindungsgemäßen Pulver zu verhindern, wird ein Niobmetallpulver mit möglichst niedrigem Fluoridgehalt bevorzugt. Daher sind Niobmetallpulver, hergestellt durch Reduktion von Niob-Oxiden, bevorzugt vor Niobmetallpulvern, hergestellt durch Reduktion von fluorhaltigen Verbindungen, wie beispielsweise K₂NbF₇. In einer bevorzugten Ausführungsform enthält das verwendete Niobmetallpulver weniger als 10 ppm Fluor, vorzugsweise weniger als 5 ppm, besonders bevorzugt weniger als 2 ppm.

Das erfindungsgemäße Pulver ist insbesondere für die Herstellung von supraleitenden Bauteilen geeignet. Daher ist ein weiterer Gegenstand der vorliegenden Erfindung die Verwendung des erfindungsgemäßen Pulvers für die Herstellung von supraleitenden Bauteilen, insbesondere für die Herstellung von supraleitenden Drähten. Das supraleitende Bauteil wird dabei vorzugsweise durch pulvermetallurgische Prozesse oder additive Fertigungsverfahren hergestellt. In einer bevorzugten Ausführungsform werden die supraleitenden Drähte nach dem PIT-Verfahren hergestellt.

Ein weiterer Gegenstand der vorliegenden Erfindung ist die Verwendung des erfindungsgemäßen Pulvers in additiven Fertigungsverfahren. Bei den additiven Fertigungsverfahren kann es sich beispielsweise um LBM (laser beam melting), EBM (electron beam melting) und/oder LC (laser cladding) handeln.

Die vorliegende Erfindung wird anhand der folgenden Beispiele näher erläutert, wobei diese keinesfalls als Einschränkung des Erfindungsgedankens zu verstehen sind.

### Beispiele:

Niobmetallpulver wurde mit Zinnmetallpulver in Gegenwart von Magnesium als Reduktionsmittel unter verschiedenen Bedingungen umgesetzt und die erhaltenen Produkte mit Schwefelsäure gewaschen und analysiert. Als Vergleichsversuche wurden Pulver herangezogen, bei denen die Umsetzung der Ausgangsverbindungen wie herkömmlich üblich ohne Reduktionsmittel und anschließender Waschung erfolgte. Das verwendete Zinnmetallpulver hatte in allen Versuchen eine Partikelgröße von weniger als 150 µm und einen Sauerstoffgehalt von 6800 ppm.

Die Ergebnisse sind in Tabelle 1 zusammengefasst, wobei die Angaben zum Sauerstoffgehalt mittels Trägergasheißextraktion (Leco TCH600) und die spezifische Oberfläche nach BET (ASTM D3663, Tristar 3000, Micromeritics) bestimmt wurde. Die Partikelgröße wurde jeweils mittels Laserbeugung (MasterSizer S, Dispersion in Wasser und Daxad11, 5 min Ultraschallbehandlung) bestimmt. Die Spurenanalytik der metallischen Verunreinigungen wie Mg erfolgte mittels ICP-OES mit den folgenden Analysegeräten PQ 9000 (Analytik Jena) oder Ultima 2 (Horiba). Die Röntgenbeugung erfolget an pulverförmigen Proben mit einem Gerät der Firma Malvern-PANalytical (X'Pert-MPD mit Halbleiterdetektor, Röntgenröhre Cu LFF mit 40KV / 40mA, Ni-Filter)

**Tabelle 1:**

| Versuch | Herstellung | Röntgenbeugung | Phasenzusammensetzung aus Rietveld Analyse | O-Gehalt [Gew.-%] | BET [m²/g] | Mg [ppm] | Partikelgröße D90 [µm] | Partikelgröße D99 [µm] |
|---|---|---|---|---|---|---|---|---|
| Vergleichsbeispiel 1 | Nb + 2 Sn | Nb, NbSn₂, Nb₃Sn, NbO | Nb: 51% | 1,29 | 0,3 | < 300 | 77 | 98 |
| | | | NbSn₂: 24% | | | | | |
| | 790 °C/ 2h | | Nb₃Sn: 19% | | | | | |
| | | | NbO: 6% | | | | | |
| Bsp. 1 | Nb + 2 Sn + Mg | NbSn₂, Nb | NbSn₂: 96% | 0,51 | 0,46 | < 300 | 54 | 79 |
| | 790 °C/ 18h | | Nb: 4% | | | | | |
| Bsp. 2 | Nb + 2 Sn + Mg | NbSn₂ Nb₆Sn₅ | NbSn₂: 98% | 0,75 | 1,9 | < 300 | 267 | 320 |
| | 790 °C/ 2h | | Nb₆Sn₅ 2% | | | | | |
| Vergleichsbeispiel 2 | 3 Nb + Sn | Nb₃Sn, NbO, Nb, NbSn₂ | Nb₃Sn: 92% | 1,42 | 0,25 | < 300 | 65 | 85 |
| | | | NbO: 3% | | | | | |
| | 1050 °C/ 6h | | Nb: 4% | | | | | |
| | | | NbSn₂ 1% | | | | | |
| Bsp. 3 | 3 Nb + Sn + Mg | Nb₃Sn | Nb₃Sn: 100% | 0,23 | 0,55 | < 300 | 76 | 88 |
| | 1050 °C/ 6 h | | | | | | | |
| Bsp. 4 | 3 Nb + Sn + Mg | Nb₃Sn | Nb₃Sn: 100% | 0,54 | 1,2 | < 300 | 239 | 287 |
| | 1050 °C/ 6h | | | | | | | |

Das für die Herstellung der Pulver der Beispiele 2 und 4 verwendete Niobmetallpulver wurde analog zu dem in der WO 00/67936 beschriebenen Herstellungsverfahren durch Umsetzung von NbOz mit Magnesiumdampf gewonnen. Das erhaltene Niobmetallpulver wies einen Sauerststoffgehalt von 8500 ppm, einen Wasserstoffgehalt von 230 ppm, einen Fluoridgehalt von 2 ppm sowie eine Agglomeratgröße D50 von 205 µm und D90 von 290 µm auf. Die mittlere Größe der Primärpartikel betrug 0,6 µm und die Porengrößenverteilung der Agglomerate war bimodal mit Maxima bei 0,5 und 3 µm. Solche Niobmetallpulver zeichnen sich durch ihre hohe Porosität aus, die jedoch entgegen der Erwartungen nicht zu einem höheren Sauerstoffgehalt und der Ausbildung einer NbO und SnO Phase im NbSn-Pulver führt. Entsprechend können auch Niobmetallpulver mit einer hohen Porosität in dem erfindungsgemäßen Verfahren eingesetzt werden.

Bei den Pulvern gemäß Beispiel 1 und 3 sowie den beiden Vergleichsversuchen wurden Niobmetallpulver nach dem Stand der Technik ohne innere Porosität der Partikel verwendet, wobei diese einen Sauerstoffgehalt von 2900 ppm, einen Wasserstoffgehalt von 10 ppm und eine Partikelgröße mit einem D90-Wert von 95 µm aufwiesen. Die Beispiele 1 und 3 zeigen, dass ein niedriger Sauerstoffgehalt und die Vermeidung der NbO und SnO Phasen auch mit diesen Ausgangsmaterialien erzielt werden kann.

Das Pulver des Beispiels 2 wurde nachfolgend in einer sauerstofffreien Atmosphäre aufgemahlen, wobei ein D90-Wert von 3,1 µm und ein D99-Wert von 4,9 µm erreicht wurde. Es wurde überraschend beobachtet, dass das Aufmahlen des Pulvers wider Erwarten nicht zu einer Erhöhung des Sauerstoffgehalts, der auch im aufgemahlenen Pulver bei 0,78 Gew.-% lag, noch zu der Ausbildung einer NbO und SnO Phase führte.

Auch hat sich überraschend gezeigt, dass die Umsetzung der Metalle in Gegenwart von Magnesium nicht dazu führt, dass Reste des Reduktionsmittels in dem Produkt verbleiben. Vielmehr wurde gefunden, dass der Gehalt an Mg in dem erfindungsgemäßen Pulver im Bereich des Üblichen liegt.

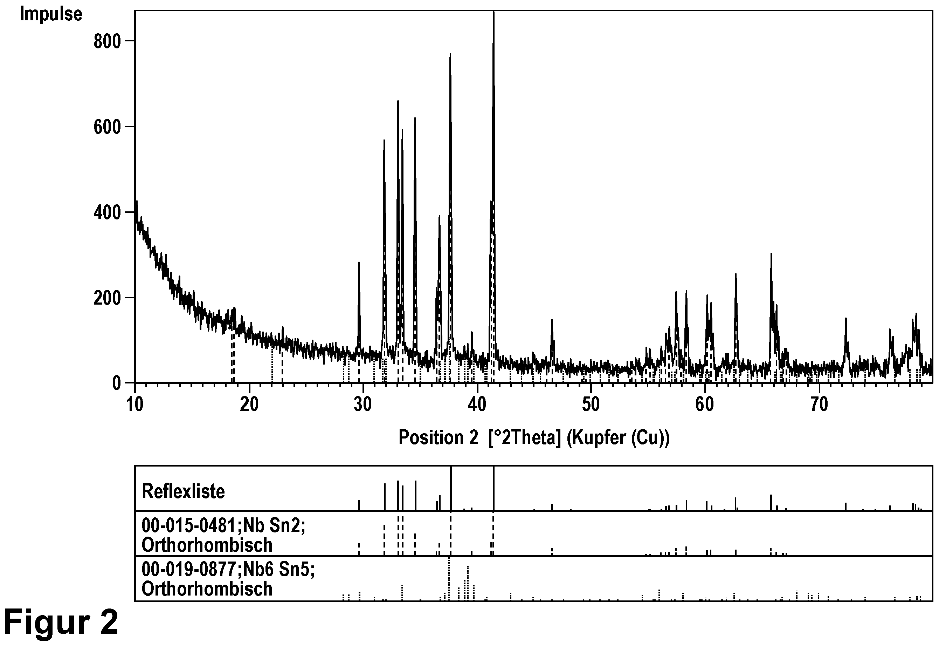

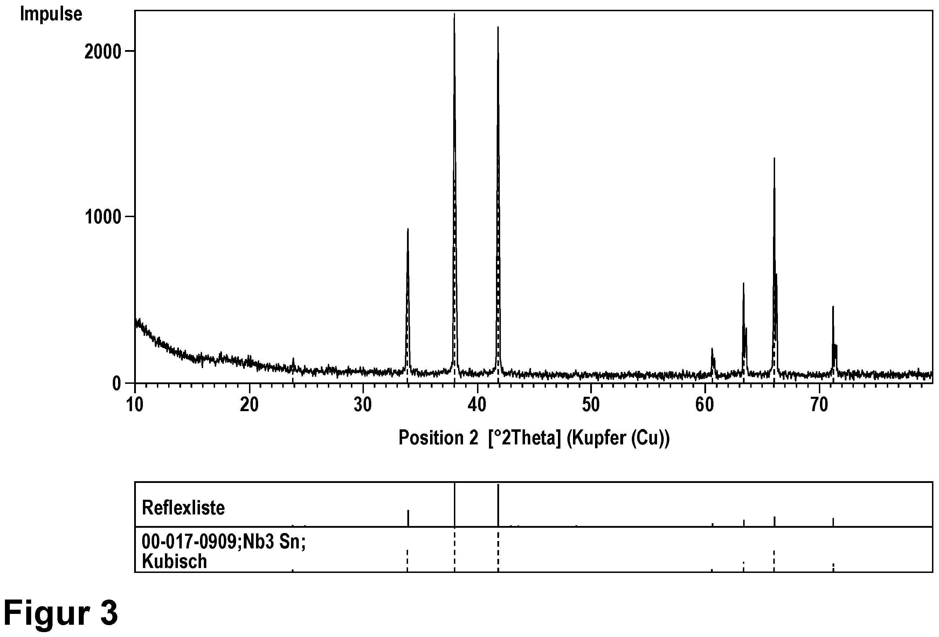

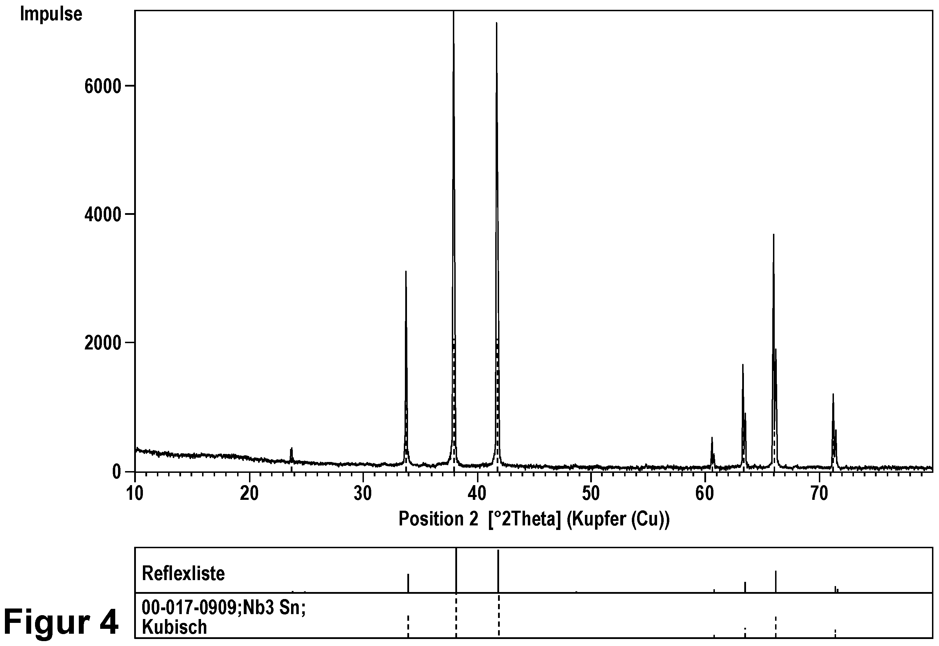

Die Figuren 2 bis 4 zeigen Röntgendiffraktogramme der erfindungsgemäßen Pulver, wobei Figur 2 das gemäß Beispiel 2 gewonnene NbSn₂, Figur 3 das gemäß Beispiel 4 gewonnene Nb₃Sn und Figur 4 das gemäß Beispiel 3 gewonnene Nb₃Sn zeigt. Auf allen Aufnahmen ist deutlich zu erkennen, dass die erfindungsgemäßen Pulver keine separaten NbO-Phasen aufweisen. Figur 1 zeigt das Röntgendiffraktogramm eines Pulvers des Standes der Technik, wie es beispielsweise gemäß dem M. Lopez et al ("Synthesis of nano intermetallic Nb3Sn by mechanical alloying and annealing at low temperature", Journal of Alloys and Compounds 612 (2014), 215-220) beschrieben ist, bei dem deutlich das Auftreten separater NbO- und SnO-Phasen zu erkennen ist.

## Patentansprüche

1. Pulver umfassend NbₓSn_{y} mit 1 ≤ x ≤ 6 und 1 ≤ y ≤ 5 für die Herstellung supraleitender Bauteile, **dadurch gekennzeichnet, dass** das Pulver keine separaten NbO- und SnO-Phasen aufweist und der Sauerstoffgehalt im Pulver weniger als 1,1 Gew.-%, bezogen auf das Gesamtgewicht des Pulvers, beträgt

2. Pulver nach Anspruch 1, **dadurch gekennzeichnet, dass** der Sauerstoffgehalt im Pulver von 0,2 bis 0,75 Gew.-% beträgt, bezogen auf das Gesamtgewicht des Pulvers.

3. Pulver nach einem oder mehrerer der vorangehenden Ansprüche, **dadurch gekennzeichnet, dass** der Anteil an Nb₃Sn oder Nb₆Sn₅ oder NbSn₂ im Pulver jeweils mehr als 92%, vorzugsweise mehr als 95%, besonders bevorzugt von mehr als 98%, ausmacht, bezogen auf alle nachgewiesen kristallographischen Phasen und basierend auf einer Rietveld-Analyse eines Röntgendiffraktogramms des Pulvers.

4. Pulver nach einem oder mehrerer der vorangehenden Ansprüche, **dadurch gekennzeichnet, dass** das Pulver eine Partikelgröße D99 von weniger als 15 µm, vorzugsweise weniger als 8 µm, besonders bevorzugt von 1 µm bis 6 µm aufweist, bestimmt mittels Laserbeugung.

5. Pulver nach einem oder mehrerer der vorangehenden Ansprüche, **dadurch gekennzeichnet, dass** das Pulver eine spezifische Oberfläche nach BET von 0,5 bis 5 m²/g, vorzugsweise 1 bis 3 m²/g aufweist.

6. Pulver nach einem oder mehrerer der vorangehenden Ansprüche, **dadurch gekennzeichnet, dass** 95% aller Pulverpartikel des erfindungsgemäßen Pulvers nach einer Verdüsung einen Feret-Durchmesser von 0,7 bis 1 aufweisen, wobei der Feret-Durchmesser definiert ist als der kleinste Durchmesser geteilt durch den größten Durchmesser eins Partikels.

7. Verfahren zur Herstellung eines Pulvers gemäß einem oder mehrerer der Ansprüche 1 bis 6, umfassend die Umsetzung von Niobmetallpulver mit Zinnmetallpulver sowie einen Reduktionsschritt in Gegenwart eines Reduktionsmittels, **dadurch gekennzeichnet, dass** in einem ersten Schritt das Niobmetallpulver mit dem Zinnmetallpulver umgesetzt und das erhaltene Produkt einem Reduktionsschritt in Gegenwart eines Reduktionsmittels unterzogen wird.

8. Verfahren nach Anspruch 6, **dadurch gekennzeichnet, dass** das eingesetzte Niobmetallpulver weniger als 3 Gew.-% Sauerstoff, bevorzugt von 0,4 bis 2,5 Gew%, besonders bevorzugt von 0,5 bis 1,5 Gew% und/oder das Zinnmetallpulver weniger als 1,5 Gew.-%, besonders bevorzugt von 0,4 bis 1,4 Gew.-% Sauerstoff aufweist, jeweils bezogen auf das Gesamtgewicht des Pulvers.

9. Verfahren nach einem oder mehrerer der Ansprüche 7 bis 8, **dadurch gekennzeichnet, dass** es sich bei dem Reduktionsmittel um ein dampfförmiges Reduktionsmittel handelt.

10. Verfahren nach einem oder mehrerer der Ansprüche 7 bis 9, **dadurch gekennzeichnet, dass** es sich bei dem Reduktionsmittel um eines handelt, das ausgewählt ist aus der Gruppe bestehend aus Magnesium, Calcium, CaH₂, MgHz und Mischungen hiervon.

11. Verfahren nach einem oder mehrerer der Ansprüche 7 bis 10, **dadurch gekennzeichnet, dass** das Verfahren weiterhin einen Schritt des Waschens des erhaltenen Produkts umfasst.

12. Verfahren nach Anspruch 11, **dadurch gekennzeichnet, dass** es sich bei dem Waschschritt um ein Waschen mit Mineralsäuren handelt, wobei die Mineralsäuren vorzugsweise ausgewählt sind aus der Gruppe bestehend aus Schwefelsäure, Salzsäure und Salpetersäure.

13. Verwendung eines Pulvers gemäß einem oder mehrerer der Ansprüche 1 bis 7 zur Herstellung von supraleitenden Bauteilen, insbesondere zur Herstellung von supraleitenden Drähten.

14. Verwendung nach Anspruch 13, **dadurch gekennzeichnet, dass** das supraleitende Bauteil durch pulvermetallurgische Prozesse oder additive Fertigungsverfahren hergestellt wird.

15. Verwendung eines Pulvers gemäß einem oder mehrerer der Ansprüche 1 bis 6 in additiven Fertigungsverfahren, insbesondere LBM (laser beam melting), EBM (electron beam melting) und/oder LC (laser cladding).

## Claims

1. Powder comprising NbₓSn_{y} where 1 ≤ x ≤ 6 and 1 ≤ y ≤ 5 for producing superconducting components, **characterized in that** the powder has no separate NbO and SnO phases and the oxygen content in the powder is less than 1.1% by weight, based on the total weight of the powder.

2. Powder according to Claim 1, **characterized in that** the oxygen content in the powder is from 0.2% to 0.75% by weight, based on the total weight of the powder.

3. Powder according to one or more of the preceding claims, **characterized in that** the fraction of Nb₃Sn or Nb₆Sn₅ or NbSn₂ in the powder makes up in each case more than 92%, preferably more than 95%, more preferably more than 98%, based on all detected crystallographic phases and on the basis of a Rietveld analysis of an X-ray diffractogram of the powder.

4. Powder according to one or more of the preceding claims, **characterized in that** the powder has a particle size D99 of less than 15 µm, preferably less than 8 µm, more preferably of 1 µm to 6 µm, determined by means of laser diffraction.

5. Powder according to one or more of the preceding claims, **characterized in that** the powder has a BET specific surface area of 0.5 to 5 m²/g, preferably 1 to 3 m²/g.

6. Powder according to one or more of the preceding claims, **characterized in that** 95% of all powder particles of the powder of the invention after atomization have a Feret diameter of 0.7 to 1, the Feret diameter being defined as the smallest diameter divided by the largest diameter of a particle.

7. Method for producing a powder according to one or more of Claims 1 to 6, comprising the reaction of niobium metal powder with tin metal powder and also a reduction step in the presence of a reducing agent, **characterized in that** in a first step the niobium metal powder is reacted with the tin metal powder and the product obtained is subjected to a reduction step in the presence of a reducing agent.

8. Method according to Claim 6, **characterized in that** the niobium metal powder used contains less than 3% by weight of oxygen, preferably from 0.4% to 2.5% by weight, more preferably from 0.5% to 1.5% by weight, and/or the tin metal powder contains less than 1.5% by weight, more preferably from 0.4% to 1.4% by weight, of oxygen, based in each case on the total weight of the powder.

9. Method according to one or more of Claims 7 to 8, **characterized in that** the reducing agent is a vaporous reducing agent.

10. Method according to one or more of Claims 7 to 9, **characterized in that** the reducing agent is one selected from the group consisting of magnesium, calcium, CaH₂, MgH₂ and mixtures thereof.

11. Method according to one or more of Claims 7 to 10, **characterized in that** the method further comprises a step of washing the product obtained.

12. Method according to Claim 11, **characterized in that** the washing step comprises washing with mineral acids, the mineral acids being preferably selected from the group consisting of sulfuric acid, hydrochloric acid and nitric acid.

13. Use of a powder according to one or more of Claims 1 to 7 for producing superconducting components, more particularly for producing superconducting wires.

14. Use according to Claim 13, **characterized in that** the superconducting component is produced by processes of powder metallurgy or by additive manufacturing methods.

15. Use of a powder according to one or more of Claims 1 to 6 in additive manufacturing methods, more particularly LBM (laser beam melting), EBM (electron beam melting) and/or LC (laser cladding).

## Revendications

1. Poudre comprenant du NbₓSn_{y} avec 1 ≤ x ≤ 6 et 1 ≤ y ≤ 5 pour la fabrication de composants supraconducteurs, **caractérisée en ce que** la poudre ne comprend pas de phases NbO et SnO distinctes, et que la teneur de la poudre en oxygène est inférieure à 1,1 % en poids par rapport au poids total de la poudre.

2. Poudre selon la revendication 1, **caractérisée en ce que** la teneur de la poudre en oxygène est de 0,2 à 0,75 % en poids par rapport au poids total de la poudre.

3. Poudre selon l'une ou plusieurs des revendications précédentes, **caractérisée en ce que** la quantité de Nb₃Sn ou de Nb₆Sn₅ ou de NbSn₂ dans la poudre est supérieure à 92 %, de préférence supérieure à 95 %, d'une manière particulièrement préférée supérieure à 98 %, par rapport à toutes les phases cristallographiques détectées, et se fondant sur une analyse de Rietveld d'un diffractogramme aux rayons X de la poudre.

4. Poudre selon l'une ou plusieurs des revendications précédentes, **caractérisée en ce que** la poudre présente une granulométrie D99 inférieure à 15 µm, de préférence inférieure à 8 µm, d'une manière particulièrement préférée de 1 µm à 6 µm, déterminée par diffraction laser.

5. Poudre selon l'une ou plusieurs des revendications précédentes, **caractérisée en ce que** la poudre présente une aire spécifique selon BET de 0,5 à 5 m²/g, de préférence de 1 à 3 m²/g.

6. Poudre selon l'une ou plusieurs des revendications précédentes, **caractérisée en ce que** 95 % de toutes les particules de la poudre selon l'invention présentent après une atomisation un diamètre de Feret de 0,7 à 1, le diamètre de Feret étant défini comme étant le diamètre le plus petit, divisé par le diamètre le plus grand d'une particule.

7. Procédé de fabrication d'une poudre selon l'une ou plusieurs des revendications 1 à 6, comprenant la réaction d'une poudre de niobium métallique avec une poudre d'étain métallique, ainsi qu'une étape de réduction en présence d'un réducteur, **caractérisé en ce que**, dans une première étape, on fait réagir la poudre de niobium métallique avec la poudre d'étain métallique, et le produit obtenu étant soumis à une étape de réduction en présence d'un réducteur.

8. Procédé selon la revendication 6, **caractérisé en ce que** la poudre de niobium métallique utilisée comprend moins de 3 % en poids d'oxygène, de préférence de 0,4 à 2,5 % en poids, d'une manière particulièrement préférée de 0,5 à 1,5 % en poids, et/ou la poudre d'étain métallique comprend moins de 1,5 % en poids, d'une manière particulièrement préférée de 0,4 à 1,4 % en poids d'oxygène, dans chaque cas par rapport au poids total de la poudre.

9. Procédé selon l'une ou plusieurs des revendications 7 à 8, **caractérisé en ce que** le réducteur est un réducteur sous forme vapeur.

10. Procédé selon l'une ou plusieurs des revendications 7 à 9, **caractérisé en ce que** le réducteur est un réducteur choisi dans le groupe consistant en le magnésium, le calcium, CaH₂, MgH₂ et les mélanges de ceux-ci.

11. Procédé selon l'une ou plusieurs des revendications 7 à 10, **caractérisé en ce que** le procédé comprend en outre une étape de lavage du produit obtenu.

12. Procédé selon la revendication 11, **caractérisé en ce que** l'étape de lavage est un lavage avec des acides minéraux, les acides minéraux étant de préférence choisis dans le groupe consistant en l'acide sulfurique, l'acide chlorhydrique et l'acide nitrique.

13. Utilisation d'une poudre selon l'une ou plusieurs des revendications 1 à 7 pour fabriquer des composants supraconducteurs, en particulier pour fabriquer des fils supraconducteurs.

14. Utilisation selon la revendication 13, **caractérisée en ce que** le composant supraconducteur est fabriqué par des procédés de la métallurgie des poudres ou par des procédés de fabrication additive.

15. Utilisation d'une poudre selon l'une ou plusieurs des revendications 1 à 6 dans un procédé de fabrication additive, en particulier par LBM (laser beam melting, fusion laser sélective), EBM (électron beam melting, fusion par faisceaux d'électrons) et/ou LC (laser cladding, dépôt laser).
